# EUROPEAN PATENT APPLICATION

(11) **EP 1 891 850 A2**
(43) Date of publication of application: **27.02.2008**
(21) Application number: 07253322.7
(22) Date of filing: 22.08.2007
(51) Int. Cl.: A01D 34/416

(54) **Rotary cutters**

(30) Priority: 22.08.2006 GB 0616650
(71) Applicant: Bessinger, Diana Jacqueline, Warnham West Sussex RH12 3RB (GB)
(72) Inventor: Bessinger, Henry, West Sussex, RH12 3RB (GB)
(74) Representative: Vigars, Christopher Ian

(57) **Abstract**

A rotary cutter head assembly for attachment to a head (101) of a rotary cutter comprises an elongate band (1) for attachment around an outer diameter of a rotary cutter head (101), the band having first and second end regions, an attachment arrangement (2) for securing the first end region to the second end region, and a cutting element holder (4,5) secured to the band for releasably receiving a filamentary cutting element.

## Description

The present invention relates to rotary cutters, and in particular to cutter heads for use with rotary cutters used in the agricultural and horticultural industries.

### BACKGROUND OF THE PRESENT INVENTION

Nylon line rotary cutters are used extensively in the agricultural and horticultural industries for cutting grass, weeds, and other plants. Many such rotary cutter devices make use of a nylon cutting thread which is fed out of a cutting head from a storage spool contained in the cutting head. Such a nylon line is liable to frequent breakage, and is inconvenient to rewind onto the nylon spool. After it has been rewound the nylon must be rethreaded through the guide holes in the cutting head.

Accordingly, it has been proposed to use individual cutting elements which are rotatably attached to the cutting head, and which are convenient and simple to replace. One such cutting element is discussed, in combination with a suitable cutting head, in European Patent EP 0683969. The cutting element has an elongate filament portion, and an enlarged head portion for engagement with a keyhole shaped locating portion. The cutting elements are moulded from a suitable plastics material, such as nylon. There are, however, some drawbacks with the existing solutions. Firstly, the existing cutting head is not suitable for attachment to smaller rotary cutter devices, such as those typically used in a domestic environment. Secondly, the moulded cutting elements can themselves break relatively often.

### SUMMARY OF THE PRESENT INVENTION

Accordingly, it is desirable to provide a cutting head attachment to which improved cutting elements can be easily and quickly attached.

According to one aspect of the present invention, there is provided a cutting element assembly for attachment to a head of a rotary cutter, the assembly comprising a cutting element holder for releasable attachment to a rotary cutter head, and adapted to receive releasably a discrete filamentary cutting element, and an attachment arrangement for attaching the cutting element holder to a head of a rotary cutter.

According to one aspect of the present invention, there is provided a rotary cutter head assembly for attachment to a head of a rotary cutter, the assembly comprising an elongate band for attachment around an outer diameter of a rotary cutter head, the band having first and second end regions, an attachment arrangement for securing the first end region to the second end region, and a cutting element holder secured to the band for reteasably receiving a filamentary cutting element.

The attachment arrangement may include a nut and bolt.

In a preferred embodiment, the cutting element holder comprises a pair of substantially parallel, substantially planar holder members which extend outwardly from the band, and which include retaining means for retaining a filamentary cutter therebetween.

The retaining means may comprise an aperture through at least one of the holder members. Alternatively, the retaining means may comprises a retaining pin for receiving a filamentary cutting element therethrough, the retaining pin extending from one holder member to the other, and being rotatably engaged with the holder members.

The holder member is preferably adjustably secured to the band.

Such an assembly preferably includes a plurality of such holder members.

According to another aspect of the present invention, there is provided a filamentary cutting element for use with a rotary cutter, the element comprising an extruded elongate filament portion, and an enlarged head portion defining an aperture therethrough, the filament portion extending through the head portion, and being retained by the head portion.

The filament portion preferably has an enlarged end region for engagement with the head portion.

In a preferred embodiment, the head portion comprises a substantially spherical portion, and an elongate shank portion extending from the substantially spherical

portion, and defines a passage which extends through the substantially spherical portion and through the elongate shank portion. According to another aspect of the present invention there is provided a head assembly for a rotary cutter comprising a substantially cylindrical body portion, and a holder member secured to an outer surface of the body portion, and arranged for receiving a filamentary cutter element therein, and a cutter element rotatably engaged with the holder member.

The holder member may comprise a pair of substantially planar portions which extend outwardly from the body portion of the assembly, substantially parallel to one another, the cutter being rotatably held between the pair of substantially planar portions.

### BRIEF DESCRIPTION OF THE DRAWINGS

Figure 1 illustrates a side view of a rotary cutter head carrying a cutting head embodying one aspect of the present invention;
Figure 2 illustrates a plan view of the cutting head of Figure 1;
Figures 3, 4 and 5 illustrates respective fastening mechanisms for use with the cutting head of Figures 1 and 2;
Figure 6 illustrates a first cutting element;
Figures 7, 8 and 9 illustrate fastening arrangements for use in an embodiment of the present invention; and
Figure 10 illustrates a cutting element embodying another aspect of the present invention.

### DETAILED DESCRIPTION

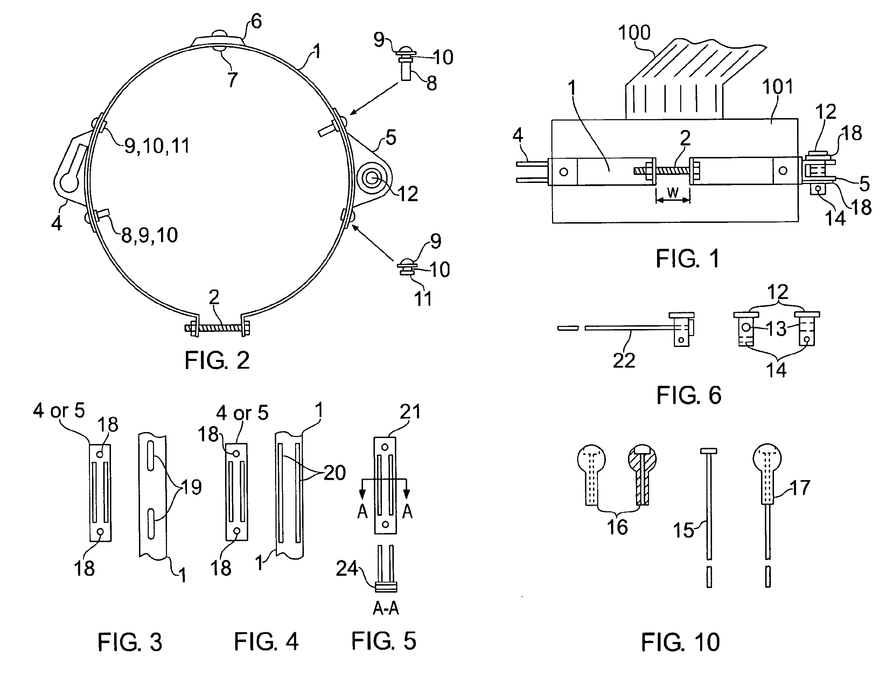

Figure 1 illustrates a shaft 100 of a rotary cutter device (not shown for clarity). The shaft 100 carries a rotary cutter head 101 through which nylon line is usually guided to provide a cutting head. A cutting head embodying the present invention is shown attached to the rotary cutter head 101. The cutting head is designed to allow the use of filamentary cutting elements on a domestic-sized electric rotary cutter, without the need for extensive or complicated adjustments to be made to the rotary cutter. It will be

readily appreciated that the cutting head of the present invention could be applied to any size or type of rotary cutter device. The cutting head embodying one aspect of the present invention comprises a band 1 of cutting head embodying one aspect of the present invention comprises a band 1 of material, for example a flexible metal strip, or other suitable material. In one nonlimiting example, the band can be provided by a type of clamp that is used for clamping water pipes in automotive and industrial applications. The cutting head is shown in plan view in Figure 2. The band 1 is secured around the rotary cutter head 101 using a fixing arrangement 2, such as a nut and bolt, or other fixing device such as a flip over fixing clamp. The arrangement 2 ensures that the cutting head is securely attached to the rotary cutter head 101. A counterweight 6 is secured, using a rivet 7 (or other suitable fastening) to the band 1 directly opposite to the arrangement 2. The counterweight serves to reduce vibration when the device is in use.

Alternative securing arrangements can be used to secure the band to the head. For example, each free end of the band can be provided with a rotatable fixing based on the use of a tapped section of round bar, with a screw holding the two sections together. The band can be manufactured in two parts, and secured around the head using welding or riveting. The band may also be provided by a solid wire or a stranded cable.

Different types of filament holder 4 and 5 are shown attached to the band 1. Each of the holders 4 and 5 is attached to the band 1 using a long shouldered rivet 8, and a washer 9, and by a shorter shouldered rivet 11, and a washer 9. The shorter rivet 11 is used solely to secure the holder 4 or 5 to the band 1. The long rivet 8 is used to orient the band 1 about the rotary cutter head 101, and to prevent rotation of the band relative to the rotary cutter head 101. When the band is fastened to the rotary cutter head, then the longer rivets 8 extend into the guide apertures in the rotary cutter head formerly used to guide the nylon cutting thread, thereby aligning and securing the holders 4 and 5 at a desired location around the cutting head. The longer rivets 8 may be provided with a threaded end portion so that the assembly can be secured by a nut inside the rotary cutter head 101.

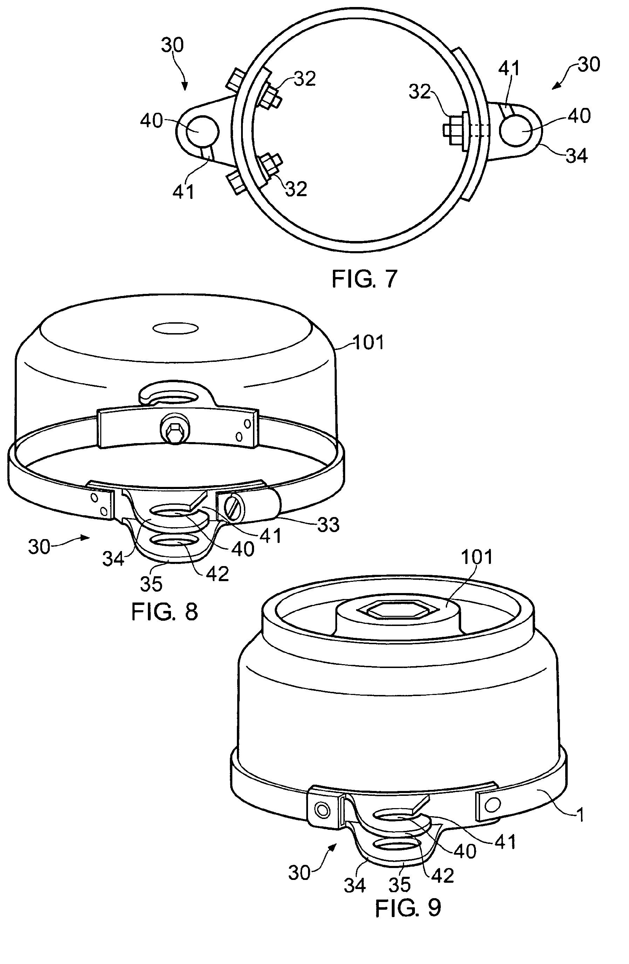

The holders 4 and 5 are used to hold respective different types of cutter elements. It will be readily appreciated that the different holders are shown for illustrative purposes will be discussed below with reference to Figures 6 and 7.

The cutting elements are held between a pair of substantially planar holder members which extend outwardly from the band 1, substantially parallel to one another.

A cutting head embodying the present invention may be used on various sizes of rotary cutter head 101. The securing arrangement 2 enables different sizes of rotary cutter head to be accommodated. However, it is then necessary to provide some adjustment for the position of the cutting element holders, in order to reduce the amount if vibration that occurs when the device is in use. Ideally, the holders should be evenly spaced around the diameter of the rotary cutter head 101. For example, when two holders are used, then they should be placed 180° to one another. This may be achieved by using existing nylon outlet holes already moulded into the trimmer head as these holes are typically at 180 degrees to one another.

Figure 3, 4 and 5 illustrate respective techniques for providing position adjustments for the holders. Figure 3 shows a first technique in which slots 19 are provided in the band 1. The slots 19 extend longitudinally along the band 1. The holder 4 or 5 is provided on a plate which defines apertures 18 through which fastenings, such as rivets 8 and 11, are received for securing the holder 4 or 5 to the band 1. The fastenings 8 and 11 extend through the apertures 18 and through the slots 19, and can be secured at varying position along the slots 19. In this way, the position of the holder 4 or 5 can be adjusted with respect to the band. In a preferred embodiment of the invention, two holders 4 or 5 are provided, and at least one of those features an adjustable fastening.

Figure 4 shows an alternative adjustment structure, in which the band is provided with elongate slots, which extend longitudinally along the band, and which enable the planar holder members to extend therethrough. The holder 4 or 5 can then be secured in an adjusted position by moving the planar holder members relatively to the band. Fastening holes 18 are provided in the holder, as before.

Figure 5 illustrates an alternative fastening technique, in which the holder 4 or 5 is provided with a channel 24 into which the band 1 is located. In this way the position of

The holder 4 or 5 can be adjusted along the band 1, before the holder is secured to the band 1. Figure 6 illustrates a filament cutting element for use with the holder 5 illustrated in Figures 1 and 2. This first filament-cutting element comprises a filament portion 22,which has an enlarged end portion. The filament portion is inserted into a hole, which extends through a retaining pin 12. The retaining pin 12 is positioned through a pair of retaining holes in the holder 5, and is secured in place using a cotter pin extending through an end region 14 of the retaining pin 12.

Figures 7, 8, and 9 illustrate alternative fastening methods for attaching filament holders to a rotary cutter head 101.

In Figure 7, a filament cutter holder 30 is simply secured directly to an inner diameter of the cutter head using nuts and bolts 32, or other appropriate fixing. Alternatively, the filament cutter holder 30 is attached directly to the outer diameter of the cutter head using a nut and bolt arrangement 32, or other appropriate fixing. In the latter case, a securing band may be provided around the holder and the head in order to provide increased security.

In Figure 8, the holder 30 is secured to the head 101 using a band and clamp arrangement 33. The clamp 33 can be similar to the type used for securing automotive hoses, sometimes known as a "jubilee clip". In Figure 9, the holder 30 is secured using a band as previously described with reference to Figure 1, with the addition of an adjustable block 36 on which the holder 30 is mounted. The adjustable block 36 is used to adjust the position of the holder 30.

In the embodiments of Figures 7, 8 and 9, the cutting element holder 30 comprises a pair 34, 35 of substantially planar portions which extend outwardly. A first 34 of the planar portions, preferably the upper when the head is in use, defines an aperture in the form of a substantially circular part 40 with a slot 41 that extends to an edge of the planar portion 34. Preferably, and as shown, the slot 41 extends in a direction substantially tangential to the cutter head 101, and preferably in the direction of rotation of the head. This serves to ensure that the cutting element remains in place during use. The circular part 40 of the aperture is of a diameter greater than that of an enlarged head portion of a filamentary cutter. The slot 41 has a width greater than the diameter of a filamentary part of the cutter. The second 35 of the planar portion defines a substantially circular aperture 42, which is of a diameter smaller than the diameter of the enlarged head portion of a filamentary cutting element. The first and second planar portions 34, 35 are spaced apart by a distance smaller than the diameter of the enlarged head of the filamentary cutting element.

A filamentary cutting element having an enlarged head portion is inserted into the holder 30 by passing the head portion through the substantially circular aperture of the first planar portion held in place in the holder 30. The filamentary portion of the cutting element is then allowed to pass through the slot, and the cutting element is rotated so as to project outwardly from the holder 30. The cutting element is held in place since the distance between the first and second planar portions is less than the diameter of the cutting element enlarged head.

Figure 10 illustrates a filamentary cutting element for use with the holder 4 shown in the previous Figures. The cutting element 17 of Figure 10 is made up of two pieces: firstly, an extruded filament portion provided with a slightly enlarged end region, and, secondly, a moulded enlarged head portion. The filament portion can be provided with the slightly enlarged end region by forming the filament material during extrusion, or by attaching a collar to the end region, for example by crimping. The head portion 16 comprises, in this example, a shank portion and an integrally formed ball head portion. In another example, the head portion 16 comprises just the ball portion, and in another, the shank portion and ball portion are separate from one another.

The head portion 16 defines a countersunk hole which extends longitudinally therethrough, for receiving the filament portion. The cutting element is then completed by locating the filament portion in the countersunk hole of the head portion in order to form an enlarged head cutting element suitable for use with the holder 4.

The cutting element 17 of Figure 10 is held in place in the cutting head by inserting it through one of the holder apertures in the holder portions of the holder 4. The planar holder portions are spaced apart by less than the diameter of the enlarged head of the cutting element, such that the holder portion are able to hold the element in place, whilst enabling the element to pivot in multiple directions.

The enlarged head filament-cutting element may be manufactured by over-moulding thee enlarged head portion onto an extruded filament portion. This has the significant advantage that the filamentary portion can have increased strength by virtue of being extruded, and the enlarged head portion can be securely attached to the filamentary portion in a simple operation.

It will be readily appreciated that the cutting head embodying one aspect of the present invention enables high performance cutting elements to be used on existing spool fed rotary cutters, without the need for extensive modification to the rotary cutter head. In addition, a filament cutting element embodying another aspect of the present invention provides an improved element, which makes uses of a stronger extruded filamentary portion, combined with the convenience of the enlarged head design.

In an alternative embodiment, the band 1 is provided in two parts, and incorporates two attachment arrangements 2. The counterweight 6 would then be omitted, as the two attachment arrangements 2 would counterbalance one another. In yet another alternative embodiment, the band may be provided with a series of linked portions which can be removed or added in order to adjust the basic size of the assembly.
Such a design enables a greater degree of flexibility for the assembly to fit differently sized cutter heads.

In yet another alternative embodiment, the holder members 4 and 5 can be secured directly with the cutter head 101, for example using rivets.

It will be readily appreciated that the devices and elements described above are merely exemplary of the present invention, and that equivalents and variations are to be considered within the scope of the present invention, as defined by the attached claims.

## Claims

1. A cutting element assembly for attachment to a head of a rotary cutter, the assembly comprising:
a cutting element holder for releasable attachment to a rotary cutter head, and adapted to receive releasably a discrete filamentary cutting element; and
an attachment arrangement for attaching the cutting element holder to a head of a rotary cutter.

2. A cutting element assembly as claimed in claim 1, wherein the attachment arrangement comprises a nut and bolt.

3. A cutting element assembly as claimed in claim 1, wherein the attachment arrangement is adapted for attaching the cutting element holder to an inner diameter of a rotary cutter head.

4. A cutting element assembly as claimed in claim 1, wherein the attachment arrangement is adapted for attaching the cutting element holder to an outer diameter of a rotary cutter head.

5. A cutting element assembly as claimed in claim 1, wherein the attachment arrangement comprises a clamping ring.

6. A cutting element assembly for attachment to a head of a rotary cutter, the assembly comprising:
an elongate band for attachment around an outer diameter of a rotary cutter head, the band having first and second end regions;
an attachment arrangement for securing the first end region to the second end region; and
a cutting element holder secured to the band for releasably receiving a filamentary cutting element.

7. A cutting element assembly as claimed in claim 6, wherein the attachment arrangement includes a nut and bolt.

8. A cutting element assembly as claimed in claim 6, wherein the cutting element holder comprises a pair of substantially parallel, substantially planar holder members which extend outwardly from the band, and which include retaining means for retaining a filamentary cutter therebetween.

9. A cutting element assembly as claimed in claim 8, wherein the retaining means comprises an aperture through at least one of the holder members.

10. A cutting element assembly as claimed in claim 8, wherein the retaining means comprises a retaining pin for receiving a filamentary cutting element therethrough, the retaining pin extending from one holder member to the other, and being rotatably engaged with the holder members.

11. A cutting element assembly as claimed in claim 6, wherein the cutting element holder is adjustably secured to the band.

12. A cutting element assembly as claimed in claim 6, comprising a plurality of such cutting element holders.

13. A cutting element assembly as claimed in claim 6, wherein the attachment arrangement defined a slot therethrough into which a cutting element is loadable.

14. A filamentary cutting element for use with a rotary cutter, the element comprising an extruded elongate filament portion, and an enlarged head portion which is overmoulded onto the filament portion.
